# EUROPEAN PATENT SPECIFICATION

(11) **EP 1 899 417 B1**
(45) Date of publication and mention of the grant of the patent: **11.03.2015**
(21) Application number: 06769509.8
(22) Date of filing: 05.07.2006
(51) Int. Cl.: C08L 67/04

(54) **METHOD OF MODIFICATION OF PROPERTIES OF POLYLACTIDE OR COMPOSITIONS CONTAINING POLYLACTIDE**
VERFAHREN ZUR MODIFIZIERUNG VON EIGENSCHAFTEN VON POLYLACTID ODER POLYLACTIDHALTIGEN ZUSAMMENSETZUNGEN
PROCEDE PERMETTANT DE MODIFIER LES PROPRIETES DU POLYLACTIDE OU DE COMPOSITIONS CONTENANT DU POLYLACTIDE

(30) Priority: 06.07.2005 PL 37608005
(43) Date of publication of application: 19.03.2008
(73) Proprietor: Centrum Badan Molekularnych I Makromolekularnych Pan, 90-363 Lodz (PL)
(72) Inventor: PIORKOWSKA-GALESKA, Ewa, 94-123 Lodz (PL); GALESKI, Andrzej, 94-123 Lodz (PL); KULINSKI, Zbigniew, 94-003 Lodz (PL)
(74) Representative: Brodowska, Iwona
(86) International application number: PCT/PL2006/000045
(87) International publication number: WO 2007/004906

(56) References cited:
- EP-A2- 0 748 846
- KE T ET AL: "THERMAL AND MECHANICAL PROPERTIES OF POLY(LACTIC ACID) AND STARCH BLENDS WITH VARIOUS PLASTICIZERS" TRANSACTIONS OF THE AMERICAN SOCIETY OF AGRICULTURAL ENGINEERS, AMERICAN SOCIETY OF AGRICULTURAL ENGINEERS. ST.JOSEPH, MI, US, vol. 44, no. 4, 2001, pages 945-953, XP009073969 ISSN: 0001-2351
- KISS E ET AL: "SURFACE PROPERTIES OF POLY(LACTIC/GLYCOLIC ACID)-PLURONIC BLEND FILMS" POLYMERS FOR ADVANCED TECHNOLOGIES, WILEY & SONS, BOGNOR REGIS, GB, vol. 14, no. 11/12, December 2003 (2003-12), pages 839-846, XP001209233 ISSN: 1042-7147

## Description

The subject of the invention is a method of modification of polylactide or compositions containing polylactide by means of blending with poly(propylene glycol).

Polylactide is a biodegradable polymer, stiff and brittle, having modulus of elasticity around 3-3.5GPa; exhibiting stiffness and brittleness at ambient temperature. Glass transition temperature of amorphous phase, Tg, is about 55-60°C.

The known method of modification of polylactide properties, plasticization, involves blending of a polymer with a substance having much lower glass transition temperature. [ L.V. Labrecque, R.A.Kumar, V.Dave, R.A.Gross, S.P.McCarthy: Citrate Esters as Plasticizers for Poly(lactic acid). J.Appl.Polym.Sci, 66, 1507-1513 (1997); N.Ljungberg, B.Wesslen: The effect of Plasticizers on the Dynamic Mechanical and Thermal Properties of Poly(lactic acid). J.Appl.Polym.Sci., 86, 1227-1234 (2002); S. Jacobsen, H.G.Fritz: Plasticizing Polylactide - The Effect of Different Plasticizers on the Mechanical Properties. Polym.Eng.Sci., 39, 1303-1310 (1999); M.Baiardo, G.Frissoni, M.Scandola, M.Rimelen, D.Lips, K.Ruffieux, E.Wintermantel: Thermal and Mechanical Properties of Plasticized Poly(L-lactic acid). J.Appl.Polym.Sci., 90, 1731-1738 (2003); M.Sheth, R.A.Kumar, V.Dave, R.A.Gross, S. P. McCarthy: Biodegradable Polymer Blends of Poly(lactic acid) and Poly(ethylene glycol). J.Appl.Polym. Sci., 66, 1495-1505 (1997); Y.Hu, M.Rogunova, V.Topolkareaev, A.Hiltner, E.Baer: Aging of poly(lactide)/poly(ethylene glycol) blends. Part I. Poly(lactide) with low stereoregularity. Polymer 44, 5701-5710 (2003).] The blend obtained in this way exhibits the glass transition temperature lower than that of neat polylactide. The blend has different physical properties like lower modulus of elasticity, larger elongation at break and, in addition, may exhibit larger impact strength.

In the description of US Patent No 5 424 346 oligomers of lactic acid, oligomers of lactide, and mixtures thereof, lactic acid, D-lactide, L- lactide, D,L-lactide, racemic D,L-lactide and mixtures thereof were listed as plasticizers. In the description of US Patent No 5 756 651 poly(ethylene glycol), poly(ethylene oxide), polycaprolactone and oligomer of lactic acid were listed as impact modifiers of polylactide. In the description of US Patent No 5 908 918 the following plasticizers of a blend of polylactide with an impact modifiers for polylactide were described: citrate esters, adipate esters, epoxidized soy oil, acetylated coconut oil, linseed oil, and mixtures thereof. In the description of US Patent No 6 117 928 carboxylic acid esters, polymeric polyesters, polyalkyl ethers, glycerol esters, glycol esters and mixtures thereof were listed as plasticizers for polylactide.

Widely investigated plasticizer for polylactide is poly(ethylene glycol) [S. Jacobsen, H.G.Fritz: Plasticizing Polylactide - The Effect of Different Plasticizers on the Mechanical Properties. Polym.Eng.Sci.,39, 1303-1310 (1999); M.Baiardo, G.Frissoni, M.Scandola, M.Rimelen, D. Lips, K.Ruffieux, E.Wintermantel: Thermal and Mechanical Properties of Plasticized Poly(L-lactic acid). J.Appl.Polym.Sci., 90, 1731-1738 (2003); M.Sheth, R.A.Kumar, V.Dave, R.A.Gross, S. P. McCarthy: Biodegradable Polymer Blends of Poly(lactic acid) and Poly(ethylene glycol). J.Appl.Polym. Sci., 66, 1495-1505 (1997); Y.Hu, M.Rogunova, V.Topolkareaev, A.Hiltner, E.Baer: Aging of poly(lactide)/poly(ethylene glycol) blends. Part I. Poly(lactide) with low stereoregularity. Polymer 44, 5701-5710 (2003)].

Admixture of poly(ethylene glycol) to polylactide decreases the glass transition temperature of polylactide, decreases the modulus of elasticity and increases the ability to plastic deformation dependent depending on a content and molecular mass. A disadvantage of poly(ethylene glycol) is its ability to crystallize. In a blend of polylactide and poly(ethylene glycol) crystallization of poly(ethylene glycol) can occur, leading to worsening of mechanical properties of the blend [Y.Hu, M.Rogunova, V.Topolkareaev, A.Hiltner, E.Baer: Aging of poly(lactide)/poly(ethylene glycol) blends. Part I. Poly(lactide) with low stereoregularity., Polymer 44, 5701-5710 (2003)].

Attempts are known to apply poly(propylene glycol) as a modifier of properties of a biodegradable polymer: poly(3-hydroxybutyrate)-poly(3-hydroxyvalerate) [V.P.Cyras, N.G.Fernandez, A.Vazquez: Biodegradable films from PHB-8HV copolymers and polyalcohols blends: crystallinity, dynamic mechanical analysis and tensile properties. Polymer International, 48, 705-712 (1999)]. Poly(propylene glycol) was found to be immiscible with this polymer.

The subject of the invention is plasticization of polylactide with oligomers and polymers of propylene glycol and propylene oxide. Such Aapplications of oligomers and polymers of propylene glycol and propylene oxide are not known.

A According to the method of modification of properties of polylactide or compositions containing polylactide with known additives, in accordance to the invention, polylactide or compositions of polylactide with known additives are mixed with a plasticizer in proportions from 0.2 to 30 weight parts per 100 weight parts of the composition, the said plasticizer being selected from the group consisting of poly(propylene glycol) and poly(propylene oxide) with molecular mass ranging from 425 to 1000 g/mol.

According to the method of modification of a composition containing polylactide in accordance to the invention, preferably, mixing is performed in the molten state or in solution. According to the invention, poly(propylene glycol) or poly(propylene oxide) is added to the composition before, during or after mixing of polylactide with known additives.

According to the invention, preferably, known organic or mineral fillers selected from the group consisting of starch, cellulose fibers and cellulose flakes, chitosan, calcium carbonate, montmorillonite and bentonite are applied as additives. According to the invention, preferably, other polymers or oligomers selected from the group consisting of poly(ethylene oxide), polycaprolactone, poly(hydroxybutyrate) and polybutadiene are applied as additives.

According to the invention, preferably, a chemical compound with a small molecular mass selected from the group consisting of pigments, stabilizers and antioxidant is applied as an additives.

According to the invention, preferably, poly (propylene glycol) with molecular mass ranging from 425 to 1000 g/mol is used.

According to the invention, preferably, the content of poly(propylene glycol) or poly(propylene oxide) in the composition is in the range from 0.5 to 30 wt. parts.

According to the invention, preferably, poly(L-lactide), poly(D- lactide), copolymers of L-lactide with D-lactide or mixture thereof are used as a polylactide.

The invention is explained below with the help of the following examples.

### Example I.

For blend preparation, poly(propylene glycol) and polylactide produced by Hycail, denoted as HMI0I0, with mass Mw of 108 kg/mol and residual monomer content of 0.5%, were used. This polylactide contains 98% of L-lactide and 2% of D-lactide. Two poly(propylene glycol)s were used: 1: with molecular mass of 425 g/mol and 2. with molecular mass of I000 g/mol. Blends containing 7.5, 10 and 12.5 wt.% of poly(propylene glycol) were prepared by blending of the components in a Brabender mixer at temperature of 190 °C for 20 min. Neat polylactide was subjected to the same treatment for comparison. Samples for further investigations, in the form of 0.3 mm thick films, were compression moulded in a hydraulic press at the temperature of 180 °C for 3 min. and quenched to room temperature. Oar shaped specimens, with the gauge length of 9.53 mm were cut out from the films for studies of mechanical properties. Ability to plastic deformation was investigated after one day, during uniaxial drawing in an Instron tensile testing machine at the rate of 5%/min, at 25°C. Comparison of properties of neat polylactide and polylactide plasticized with poly(propylene glycol) is shown in Table 1.

**Table 1.**

| Poly(propylene glycol) content | Molecular mass of poly(propylene glycol) [g/mol] | Elongation at break [%] | Stress at break [MPa] |
|---|---|---|---|
| 0 wt.% | ---- | 64 | 26 |
| 7.5 wt. % | 425 | 76 | 18 |
| 10 wt. % | 425 | 524 | 21 |
| 12.5 wt.% | 425 | 721 | 21 |
| 7.5 wt.% | 1000 | 316 | 23 |
| 10 wt. % | 1000 | 473 | 23 |
| 12.5 wt.% | 1000 | 497 | 22 |

### Example II.

Films for the studies, of neat polylactide produced by Hycail, and also of a blend of polylactide and poly(propylene glycol) with molecular mass of 425 g/mol, containing 10wt.% of poly(propylene glycol), obtained as it is described in the Example I, were annealed in order to crystallize polylactide. The film of blend of polylactide and poly (propylene glycol) was annealed for 1 hr at temperature 90°C, whereas the film of neat polylactide at temperature 100°C for 2 hrs. Oar shaped specimens, with gauge length of 9.53mm were cut out from the films. Ability for the plastic deformation was investigated after one day, during uniaxial drawing in an Instron testing machine at the rate of 5%/min, at 25°C.

For the film of blend of polylactide and poly(propylene glycol) the elongation at break of 62% was reached, whereas for the neat polylactide only 9%.

### Example III.

Polylactide produced by Hycail, poly(propylene glycol) and a pigment named as methyl blue were used for composition preparation. A composition containing polylactide produced by Hycail, poly(propylene glycol) with molecular mass of 425 g/mol and methyl blue in the weight proportions: 88.2:9.8:2 was obtained by mixing all of the components in a Brabender mixer at 190 °C for 20 min. For comparison, a composition of polylactide and methyl blue in weight proportions: 98:2, was prepared using the same route. Specimens for studies of mechanical properties were prepared following the protocol described in the Example I. Ability to the plastic deformation was studied as in the Example I. For the composition of polylactide with methyl blue the elongation at break of 10% and the stress at break of 36MPa were reached, whereas for the composition of polylactide, methyl blue and poly(propylene glycol) an elongation at break and stress at break were 470% and 19 MPa, respectively.

### Example IV.

Polylactide produced by Hycail, poly(propylene glycol) with molecular mass of 425 g/mol and a filler in the form of ground cellulose flakes were used for composition preparation. A composition containing polylactide produced by Hycail, poly(propylene glycol) with molecular mass of 425 g/mol and cellulose flakes in the weight proportions: 72:8:20 was obtained by mixing of all the components in a Brabender mixer at 190 °C for 20 min. For comparison, a composition of polylactide and cellulose flakes in weight proportions: 80:20, was prepared using the same route. Specimens for studies of mechanical properties were prepared following the protocol described in the Example I. Ability to plastic deformation was studied as in the Example I. For the composition of polylactide with cellulose flakes the elongation at break of 3% and the stress at break of 32 MPa were reached, whereas for the composition of polylactide, cellulose flakes and poly(propylene glycol) an elongation at break and stress at break were 38% and 9 MPa, respectively.

### Example V.

Polylactide produced by Hycail, poly(propylene glycol) with molecular mass of 425 g/mol and montmorillonite filler were used for composition preparation. A composition containing polylactide produced by Hycail, poly(propylene glycol) with molecular mass of 425 g/mol and montmorillonite in the weight proportions: 85.5:9.5:5 was obtained by mixing of all the components in a Brabender mixer at 190 °C for 20min. For comparison, a composition of polylactide and montmorillonite in weight proportions: 95:5, was prepared using the same route. Specimens for studies of mechanical properties were prepared following the protocol described in the Example I. Ability to plastic deformation was studied as in the Example I. For the composition of polylactide with montmorillonite the elongation at break of 3% and the stress at break of 44 MPa were reached, whereas for the composition of polylactide, montmorillonite and poly(propylene glycol) an elongation at break and stress at break were 241% and 16 MPa, respectively.

### Example VI.

Polylactide produced by Hycail, poly(propylene glycol) with molecular mass of 425g/mol and poly(ethylene oxide) with Mw=100 kg/mol were used for blend preparation. A blend containing polylactide produced by Hycail, poly(propylene glycol) with molecular mass of 425 g/mol and poly(ethylene oxide) in the weight proportions: 81:9:10 was obtained by mixing all of the components in a Brabender mixer at 190 °C for 20 min. For comparison, a blend of polylactide and poly(ethylene oxide) in weight proportions: 90:10, was prepared using the same route. Specimens for studies of mechanical properties were prepared following the protocol described in the Example I. Ability to the plastic deformation was studied as in the Example I. For the blend of polylactide with poly(ethylene oxide) the elongation at break of 495% and the stress at break of 22 MPa were reached, whereas for the composition of polylactide, poly(ethylene oxide) and poly(propylene glycol) an elongation at break and stress at break were 772% and 19 MPa, respectively.

### Example VII.

Blends of polylactide produced by Hycail and poly(propylene glycol) with molecular mass of 425 g/mol, containing 5, 7.5, 10 and 12.5 wt% of poly(propylene glycol) were prepared according to the route described in the Example I. Neat polylactide was subjected to the same treatment for comparison. Films for studies were prepared using the protocol described in the Example I. From the films, specimens with the diameter of 5mm were cut out, for studies by a differential scanning calorimetry method during heating at the rate of 10 K/min. Temperature corresponding to a midpoint of specific heat increment was taken as temperature of the transition from the glassy state to the rubbery state, Tg. The results obtained are shown in Table 2.

**Table 2.**

| Poly(propylene glycol) content | T_{g} [°C] |
|---|---|
| 0 wt. % | 55.5 |
| 5 wt. % | 44.5 |
| 7.5 wt. % | 38.5 |
| 10 wt. % | 33.0 |
| 12.5 wt.% | 27.0 |

### Example VIII

Poly(L-lactide) with molecular mass Mw of 104 kg/mol, obtained by thermal polymerization in bulk, and poly(propylene glycol) with mass Mw of 425 g/mol were used for blend preparation. 2 % solution of poly(L-lactide) in methylene chloride was prepared in two pots. Poly(propylene glycol) was added to one of the pots, in the proportion: 10 weight parts of poly(propylene glycol) to 90 weight parts of poly(L-lactide) and the solution was stirred for 20 min. After one day from the solution of poly(L-lactide) and from the solution of blend of poly(L-lactide) and poly(propylene glycol) films were cast, which were dried for 4 hrs, in vacuum at temperature of 75 °C. From the films specimens having mass of 7 mg were prepared for studies by a differential scanning calorimetric method. The temperature of the transition from the glassy state to the rubbery state was determined during heating at the rate of 10 K/min as the temperature corresponding to a midpoint of specific heat increment during heating. Poly(L-lactide) without admixture of poly(propylene glycol) exhibited the temperature of the transition from the glassy state to the rubbery state of 43 °C, whereas the corresponding temperature for the blend of poly(L-lactide) and poly(propylene glycol) was 31.5 °C.

An advantage of the method according to the invention is a composition with lower temperature of glass transition and better ability to the plastic deformation than those of neat polylactide.

An advantage of the method according to the invention is easy admixing of poly(propylene glycol) or poly(propylene oxide) to polylactide.

An advantage of the method according to the invention is that poly(propylene glycol) and atactic poly(propylene oxide) are not crystallizable, therefore neither the crystallization of poly(propylene glycol) in a blend of polylactide with poly(propylene glycol) nor crystallization of poly(propylene oxide) in a blend of polylactide with poly(propylene oxide) occurs.

## Claims

1. Method of modification of the properties of polylactide or compositions containing polylactide, **characterized in that** polylactide or compositions of polylactide with known additives are mixed with a plasticizer in proportions from 0.2 to 30 weight parts per 100 weight parts of the composition, the said plasticizer being selected from the group consisting of poly(propylene glycol) and poly(propylene oxide) with molecular mass ranging from 425 to 1000 g/mol.

2. Method according to Claim 1, **characterized in that** mixing is performed in the molten state or in solution.

3. Method according to Claim 1, **characterized in that** poly(propylene glycol) or poly(propylene oxide) is added to the composition before, during or after mixing of polylactide with the additives.

4. Method according to Claim 1, **characterized in that** a substance being an organic filler or mineral filler is used as the additive, selected from a group consisting of starch, cellulose fibers or flakes, chitosan, calcium carbonate, talc, montmorillonite and bentonite.

5. Method according to Claim 1, **characterized in that** another polymer or oligomer is used as the additive, selected from a group consisting of poly(ethylene oxide), polycaprolactone, poly(hydroxybutyrate) and polybutadiene.

6. Method according to Claim 1, **characterized in that** a chemical compound with small molecular weight is used as the additive, selected from a group consisting of pigments, stabilizers and antioxidants.

## Patentansprüche

1. Methode der Veränderung der Eigenschaften von Polylactid oder Kompositionen mit Polylactiden, **gekennzeichnet dadurch, dass** Polylactid bzw. Kompositionen von Polylactiden mit bekannten Zusatzstoffen mit einem Weichmacher in Proportionen von 0,2 bis 30 Gewicht Teile pro 100 Gewicht Teile der Komposition gemischt werden, die genannten Weichmacher aus der Gruppe bestehend aus Poly(Propylenglykol) und Poly(Propylenoxide) ausgewählt werden, mit einer Molekülmasse von 425 bis hin zu 1000 g/Mol.

2. Methode nach Anspruch 1, **gekennzeichnet dadurch, dass** die Mischung während der Schmelze oder in Lösung durchgeführt wird.

3. Methode nach Anspruch 1, **gekennzeichnet dadurch, dass** Poly(Propylenglycol) oder Poly(Propylenoxide) in die Zusammensetzung vor, während oder nach der Mischung von Polylactiden und Zusatzstoffen hinzugefügt wird.

4. Methode nach Anspruch 1, **gekennzeichnet dadurch, dass** als Zusatz ein organischer oder mineralischer Füllstoff aus einer Gruppe von Stärke, Zellulosefasern oder Zelluloseflocken, Chitosan, Calciumcarbonat, Talkum, Montmorillonit und Bentonit verwendet wird.

5. Methode nach Anspruch 1, **gekennzeichnet dadurch, dass** als Zusatz ein anderes Polymer oder Oligomer aus einer Gruppe von Poly(Ethyleneoxide), Polycaprolacton, Poly(Hydroxybutyrate) und Polybutadien verwendet wird.

6. Methode nach Anspruch 1, **gekennzeichnet dadurch, dass** als Zusatz eine chemische Verbindung mit kleinen Molekülmasse aus einer Gruppe von Pigmenten, Stabilisatoren und Antioxidantien verwendet wird.

## Revendications

1. Méthode de modification des propriétés du polylactide ou des compositions contenant du polylactide, caractérisée dans ce sens où ce polylactide ou ces compositions à base de polylactide avec des additifs connus sont mélangés avec un plastifiant de teneur variant en pourcentage massique de 0.2 à 30 (100 % en poids dans les compositions), le ledit plastifiant étant sélectionné à partir de groupes qui consiste en du poly(propylène)-glycol et oxyde de poly(propylène) de poids moléculaire variant de 425 à 1000 g/mol.

2. Méthode d'après la déclaration 1, caractérisée dans ce sens où le mélange est effectué dans l'état fondu ou en solution.

3. Méthode d'après la déclaration 1, caractérisée dans ce sens où le poly(propylène)-glycol ou l'oxyde de poly(propylène) est ajouté à la composition avant, pendant, après le mélange du polylactide avec les additifs.

4. Méthode d'après la déclaration 1, caractérisée dans ce sens où une substance étant une charge organique ou minérale est utilisée en tant qu'additif, sélectionné à partir d'un groupe qui consiste en de l'amidon, fibres ou flocon de cellulose, chitosane, carbonate de calcium, talc, argile (montmorillonite) et réfractaire.

5. Méthode d'après la déclaration 1, caractérisée dans ce sens où un autre polymère ou oligomère est utilisé en tant qu'additif, sélectionné à partir d'un groupe qui consiste en de l'oxyde de poly(éthylène), polycaprolactone, poly(hydroxybutyrate) et polybutadiène.

6. Méthode d'après la déclaration 1, caractérisée dans ce sens où un composé chimique de faible poids moléculaire est utilisé en tant qu'additif, sélectionné à partir d'un groupe qui consiste en des pigments, stabilisateurs et antioxydants.
